(19)

Europäisches Patentamt
European Patent Office
Office européen des brevets

(11) **EP 4 383 890 A1**

(12) **EUROPEAN PATENT APPLICATION**
published in accordance with Art. 153(4) EPC

(43) Date of publication:
**12.06.2024 Bulletin 2024/24**

(21) Application number: **22852280.1**

(22) Date of filing: **04.08.2022**

(51) International Patent Classification (IPC):
***H04W 72/04*** (2023.01)

(52) Cooperative Patent Classification (CPC):
**H04W 72/04; Y02D 30/70**

(86) International application number:
**PCT/CN2022/110145**

(87) International publication number:
**WO 2023/011568 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 CN 202110904389**

(71) Applicant: **Datang Mobile Communications Equipment Co., Ltd.**
**Beijing 100085 (CN)**

(72) Inventors:
• **LUO, Chen**
**Beijing 100085 (CN)**

• **WANG, Jiaqing**
**Beijing 100085 (CN)**
• **YANG, Meiying**
**Beijing 100085 (CN)**
• **ZHANG, Yinghao**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **DYNAMIC DATA TRANSMISSION METHOD AND APPARATUS, AND STORAGE MEDIUM**

(57)     Embodiments of the present disclosure provide a dynamic data transmission method and apparatus, and a storage medium. The method comprises: configuring, for a terminal, dynamic resource indication information associated with semi-persistent scheduling (SPS); and performing dynamic data transmission indication by using the dynamic resource indication information in a discontinuous reception off (DRX-off) period. According to the dynamic data transmission method and apparatus, and the storage medium provided in the embodiments of the present disclosure, during the DRX-off period, SPS PDSCH transmission is assisted by means of dynamic scheduling, and in the case that a data packet is relatively large but reserved SPS PDSCH resources are insufficient, the transmission of the data packet is assisted, without waiting for the next SPS PDSCH or a DRX-on period, thereby reducing the transmission delay.

```
┌─────────────────────────────────────────────┐
│ Configuring dynamic resource indication       │  101
│ information associated with semi-persistent    │
│ scheduling (SPS) for a terminal                │
└─────────────────────────────────────────────┘
                      │
                      ▼
┌─────────────────────────────────────────────┐
│ Indicating dynamic data transmission using     │  102
│ the dynamic resource indication information     │
│ during a discontinuous reception (DRX)-off      │
│ period                                          │
└─────────────────────────────────────────────┘
```

FIG. 1

EP 4 383 890 A1

# Description

## CROSS-REFERENCE TO RELATED APPLICATION

The present application claims priority to Chinese patent application No. 202110904389.2 filed on August 06, 2021, entitled "Dynamic Data Transmission Method and Apparatus, and Storage Medium", which is hereby incorporated by reference in its entirety.

## FIELD

The present application relates to the field of communication, and in particular to dynamic data transmission methods and apparatuses, and a storage medium.

## BACKGROUND

With the continuous development and improvement of the 5th generation mobile communication (5G) technology, low-latency, high-bandwidth services and scenarios for consumers have become current focus. An extended reality (XR) service is one of them.

It is conducive to the periodicity of semi-persistent scheduling (SPS) because of quasiperiodic features of the XR service. On one hand, data may be transmitted on a pre-configured periodic physical downlink shared channel (PDSCH), and no scheduling request is needed. On the other hand, PDSCH transmission may be performed in SPS scheduling during a discontinuous reception (DRX)-off period. Therefore, SPS scheduling in the related art may be applied to XR service transmission.

However, XR service transmission using a traditional SPS scheduling has a problem of large transmission delay.

## SUMMARY

Embodiments of the present application provide dynamic data transmission methods and apparatuses and a storage medium, which solve a technical problem of large transmission delay in the related art.

An embodiment of the present application provides a dynamic data transmission method, applied to a network side device, including:

> configuring dynamic resource indication information associated with semi-persistent scheduling (SPS) for a terminal; and
> indicating dynamic data transmission by using the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the method further includes: configuring monitoring position information for the DCI signaling for the terminal.

In an embodiment, the monitoring position information includes one or more of the following information:

> monitoring position information semi-statically configured through higher layer signaling; and
> monitoring position information dynamically adjusted based on first information.

In an embodiment, in case that the monitoring position information includes the monitoring position information configured semi-statically through the higher layer signaling, the configuring the monitoring position information for the DCI signaling for the terminal includes:

> configuring a monitoring start time for the DCI signaling for the terminal; or,
> configuring a monitoring start time and a duration of a monitoring window for the DCI signaling for the terminal; or,
> configuring a monitoring start time and a monitoring end time of a monitoring window for the DCI signaling for the terminal.

In an embodiment, the duration is determined by one or more of the following:

> carrying in L1 signaling;
> carrying in a media access control (MAC) layer signaling;
> carrying in higher layer signaling; and
> a monitoring timer.

In an embodiment, the monitoring position information further includes one or more of the following information:

> a time point associated with SPS; and
> an independent time point.

In an embodiment, the time point associated with SPS is one or more of the following time points:

> a time point associated with an SPS physical downlink shared channel (PDSCH);
> a time point associated with a hybrid automatic repeat request (HARQ)-acknowledge (ACK) for an SPS PDSCH; and
> a time point associated with expiring of an SPS PDSCH round trip time (RTT) timer.

In an embodiment, a time unit of an offset value of the monitoring position information relative to the time point is a slot, a span, a symbol or millisecond.

In an embodiment, the method further includes:

transmitting a dynamic transmission indicator to the terminal, where the dynamic transmission indicator is used for indicating the terminal that the network side device performs dynamic data transmission.

In an embodiment, the method further includes: transmitting a stop indicator to the terminal, where the stop indicator is used for indicating the terminal that the network side device stops dynamic data transmission.

In an embodiment, the stop indicator is carried through L1 signaling, media access control (MAC) control element (CE) signaling, a power saving signal or higher layer signaling.

An embodiment of the present application further provides a dynamic data transmission method, applied to a terminal, including:

determining dynamic resource indication information associated with semi-persistent scheduling (SPS) transmitted from a network side device; and receiving dynamic data based on the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the method further includes: determining monitoring position information for the DCI signaling.

In an embodiment, the determining the monitoring position information for the DCI signaling includes:

determining a monitoring start time for the DCI signaling; or, determining a monitoring start time and a duration of a monitoring window for the DCI signaling; or, determining a monitoring start time and a monitoring end time of a monitoring window for the DCI signaling.

In an embodiment, the method further includes: receiving a stop indicator transmitted from the network side device, where the stop indicator is used for indicating the terminal that the network side device stops dynamic data transmission.

An embodiment of the present application further provides a network side device, including a memory storing a computer program, a processor and a transceiver transmitting and receiving data under control of the processor,

where the computer program, when executed by the processor of the network side device, causes the network side device to perform the following operations of:

configuring dynamic resource indication information associated with semi-persistent scheduling (SPS) for a terminal; and

indicating dynamic data transmission by using the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the computer program, when executed by the processor of the network side device, causes the network side device to further perform the following operation of:

configuring monitoring position information for the DCI signaling for the terminal.

In an embodiment, the monitoring position information includes one or more of the following information:

monitoring position information semi-statically configured through higher layer signaling; and monitoring position information dynamically adjusted based on first information.

In an embodiment, in case that the monitoring position information includes the monitoring position information configured semi-statically through the higher layer signaling, the configuring the monitoring position information for the DCI signaling for the terminal includes:

configuring a monitoring start time for the DCI signaling for the terminal; or, configuring a monitoring start time and a duration of a monitoring window for the DCI signaling for the terminal; or, configuring a monitoring start time and a monitoring end time of a monitoring window for the DCI signaling for the terminal.

In an embodiment, the duration is determined by one or more of the following:

carrying in L 1 signaling; carrying in a media access control (MAC) layer signaling; carrying in higher layer signaling; and a monitoring timer.

In an embodiment, the monitoring position information further includes one or more of the following information:

a time point associated with SPS; and an independent time point.

In an embodiment, the time point associated with SPS is one or more of the following time points:

a time point associated with an SPS physical downlink shared channel (PDSCH);
a time point associated with a hybrid automatic repeat request (HARQ)-acknowledge (ACK) for an SPS PDSCH; and
a time point associated with expiring of an SPS PDSCH round trip time (RTT) timer.

In an embodiment, a time unit of an offset value of the monitoring position information relative to the time point is a slot, a span, a symbol or millisecond.

In an embodiment, the computer program, when executed by the processor of the network side device, causes the network side device to further perform the following operation of:
transmitting a dynamic transmission indicator to the terminal, where the dynamic transmission indicator is used for indicating the terminal that the network side device performs dynamic data transmission.

In an embodiment, the computer program, when executed by the processor of the network side device, causes the network side device to further perform the following operation of:
transmitting a stop indicator to the terminal, where the stop indicator is used for indicating the terminal that the network side device stops dynamic data transmission.

In an embodiment, the stop indicator is carried through L 1 signaling, media access control (MAC) control element (CE) signaling, a power saving signal or higher layer signaling.

An embodiment of the present application further provides a terminal, including a memory storing a computer program, a processor and a transceiver transmitting and receiving data under control of the processor, where the computer program, when executed by the processor of the terminal, causes the terminal to perform the following operations of:

determining dynamic resource indication information associated with semi-persistent scheduling (SPS) transmitted from a network side device; and
receiving dynamic data based on the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the computer program, when executed by the processor of the terminal, causes the terminal to further perform the following operation of:
determining monitoring position information for the DCI signaling.

In an embodiment, the determining the monitoring position information for the DCI signaling includes:

determining a monitoring start time for the DCI signaling; or,

determining a monitoring start time and a duration of a monitoring window for the DCI signaling; or,
determining a monitoring start time and a monitoring end time of a monitoring window for the DCI signaling.

In an embodiment, the computer program, when executed by the processor of the terminal, causes the terminal to further perform the following operation of:
receiving a stop indicator transmitted from the network side device, where the stop indicator is used for indicating the terminal that the network side device stops dynamic data transmission.

An embodiment of the present application further provides a dynamic data transmission apparatus, including:

a configuring module, used for configuring dynamic resource indication information associated with semi-persistent scheduling (SPS) for a terminal; and
an indicating module, used for indicating dynamic data transmission by using the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the dynamic data transmission apparatus further includes a second configuring module,
where the second configuring module is used for configuring monitoring position information for the DCI signaling for the terminal.

In an embodiment, the monitoring position information includes one or more of the following information:

monitoring position information semi-statically configured through higher layer signaling; and
monitoring position information dynamically adjusted based on first information.

In an embodiment, in case that the monitoring position information includes the monitoring position information configured semi-statically through the higher layer signaling, the second configuring module includes a first configuring sub-module, a second configuring sub-module and a third configuring sub-module,

where the first configuring sub-module is used for configuring a monitoring start time for the DCI signaling for the terminal;
the second configuring sub-module is used for configuring a monitoring start time and a duration of a monitoring window for the DCI signaling for the terminal; and

the third configuring sub-module is used for configuring a monitoring start time and a monitoring end time of a monitoring window for the DCI signaling for the terminal.

In an embodiment, the duration is determined by one or more of the following:

    carrying in L1 signaling;
    carrying in a media access control (MAC) layer signaling;
    carrying in higher layer signaling; and
    a monitoring timer.

In an embodiment, the monitoring position information further includes one or more of the following information:

    a time point associated with SPS; and
    an independent time point.

In an embodiment, the time point associated with SPS is one or more of the following time points:

    a time point associated with an SPS physical downlink shared channel (PDSCH);
    a time point associated with a hybrid automatic repeat request (HARQ)-acknowledge (ACK) for an SPS PDSCH; and
    a time point associated with expiring of an SPS PDSCH round trip time (RTT) timer.

In an embodiment, a time unit of an offset value of the monitoring position information relative to the time point is a slot, a span, a symbol or millisecond.

In an embodiment, the dynamic data transmission apparatus further includes a first indicating module, where the first indicating module is used for transmitting a dynamic transmission indicator to the terminal, where the dynamic transmission indicator is used for indicating the terminal that the network side device performs dynamic data transmission.

In an embodiment, the dynamic data transmission apparatus further includes a second indicating module, where the second indicating module is used for transmitting a stop indicator to the terminal, where the stop indicator is used for indicating the terminal that the network side device stops dynamic data transmission.

In an embodiment, the stop indicator is carried through L1 signaling, media access control (MAC) control element (CE) signaling, a power saving signal or higher layer signaling.

An embodiment of the present application further provides a dynamic data transmission apparatus, including:

    a determining module, used for determining dynamic resource indication information associated with semi-persistent scheduling (SPS) transmitted from a network side device; and
    a receiving module, used for receiving dynamic data based on the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the dynamic data transmission apparatus further includes a second determining module,
where the second determining module is used for determining monitoring position information for the DCI signaling.

In an embodiment, the second determining module includes a first determining sub-module, a second determining sub-module and a third determining sub-module,

    where the first determining sub-module is used for determining a monitoring start time for the DCI signaling;
    the second determining sub-module is used for determining a monitoring start time and a duration of a monitoring window for the DCI signaling; and
    the third determining sub-module is used for determining a monitoring start time and a monitoring end time of a monitoring window for the DCI signaling.

In an embodiment, the dynamic data transmission apparatus further includes a second receiving module,
where the second receiving module is used for receiving a stop indicator transmitted from the network side device, where the stop indicator is used for indicating the terminal that the network side device stops dynamic data transmission.

An embodiment of the present application provides a processor-readable storage medium storing a computer program that when executed by a processor, causes the processor to perform the steps of the dynamic data transmission method described above.

In the dynamic data transmission methods and apparatuses and the storage medium provided by the embodiments of the present application, SPS PDSCH transmission is assisted through dynamic scheduling within DRX off period to complete the transmission of data services with large differences in data size. In case that the data packet is large, and the reserved SPS PDSCH resources are insufficient, data packet transmission is assisted without waiting for the next SPS PDSCH or DRX on period. In case that the data packet is small, the periodicity of reserved SPS PDSCH resources and dynamic scheduling resources may be used to complete data transmission and the transmission delay is reduced.

## BRIEF DESCRIPTION OF THE DRAWINGS

In order to clearly illustrate the solutions disclosed in the embodiments of the present application, the drawings used in the descriptions of the embodiments are briefly described below. The drawings in the following description are only some embodiments of the present application, and other drawings may be obtained according to these drawings without creative work for those skilled in the art.

FIG. 1 is a first schematic flowchart of a dynamic data transmission method according to an embodiment of the present application;
FIG. 2 is a first schematic diagram of a semi-persistent scheduling (SPS) physical downlink shared channel (PDSCH) enhancement scheme according to an embodiment of the present application;
FIG. 3 is a second schematic diagram of a semi-persistent scheduling (SPS) physical downlink shared channel (PDSCH) enhancement scheme according to an embodiment of the present application;
FIG. 4 is a third schematic diagram of a semi-persistent scheduling (SPS) physical downlink shared channel (PDSCH) enhancement scheme according to an embodiment of the present application;
FIG. 5 is a second schematic flowchart of a dynamic data transmission method according to an embodiment of the present application;
FIG. 6 is a schematic structural diagram of a network side device according to an embodiment of the present application;
FIG. 7 is a schematic structural diagram of a terminal according to an embodiment of the present application;
FIG. 8 is a first schematic structural diagram of a dynamic data transmission apparatus according to an embodiment of the present application; and
FIG. 9 is a second schematic structural diagram of a dynamic data transmission apparatus according to an embodiment of the present application.

## DETAILED DESCRIPTION

In order to illustrate the objectives, solutions and advantages of the present application clearly, the solutions in the embodiments of the present application are clearly and completely described in the following in conjunction with the accompanying drawings in the present application. These embodiments are a part of the embodiments of the present application, and not all of the embodiments. All other embodiments obtained by a person of ordinary skill in the art based on the embodiments of the present application without creative work are within the scope of the present application.

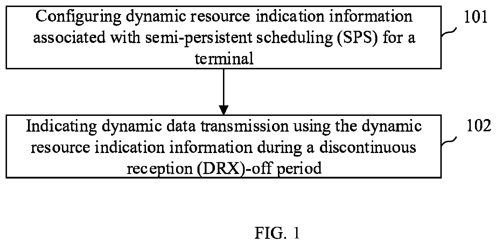

FIG. 1 is a first schematic flowchart of a dynamic data transmission method according to an embodiment of the present application. As shown in FIG. 1, the dynamic data transmission method according to an embodiment of the present application may be applied to a network side device, such as a base station, etc. The method includes the following steps.
Step 101: configuring dynamic resource indication information associated with semi-persistent scheduling (SPS) for a terminal.
In an embodiment, the network side device first configures the dynamic resource indication information associated with the SPS for the terminal.
The terminal determines the dynamic resource indication information associated with the SPS transmitted from the network side device.
For the dynamic resource indication information, it may be downlink control information (DCI) signaling associated with SPS, or it may be resource information (for example, a physical downlink shared channel (PDSCH) resource) carried by the DCI associated with the SPS. There may be one or multiple pieces of dynamic resource indication information associated with the SPS. The embodiments of the present application are described by taking one piece of dynamic resource indication information associated with the SPS as an example. The situation of multiple pieces of dynamic resource indication information associated with the SPS is similar thereto and is not described again here.
In an embodiment, the dynamic resource indication information is a DCI signaling associated with SPS, and resource allocation information is carried through the DCI signaling.
In an embodiment, the method further includes: configuring, by the network side device, monitoring position information for the DCI signaling for the terminal.
In an embodiment, the monitoring position information includes one or more of the following information.
Option 1: monitoring position information semi-statically configured through higher layer signaling.
In an embodiment, in case that the monitoring position information includes the monitoring position information configured semi-statically through the higher layer signaling, the network side device configures the monitoring position information for the DCI signaling for the terminal by the following.

1. The network side device configures a monitoring start time for the DCI signaling for the terminal.

The monitoring start time includes one or more of the following information:

(1) a time point associated with SPS; and
(2) an independent time point.

2. The network side device configures a monitoring window for the DCI signaling for the terminal.

The network side device configures the monitoring window for the DCI signaling for the terminal by the following.

(1) The network side device configures a monitoring start time and a duration of the monitoring window for the DCI signaling for the terminal.

The monitoring start time includes one or more of the following information:

i. a time point associated with SPS; and
ii. an independent time point.

The duration of the monitoring window for the DCI signaling may be indicated explicitly or implicitly.
The duration of the monitoring window for the DCI signaling may be indicated explicitly by one or more of the following:

carrying the duration of the monitoring window for the DCI signaling in L 1 signaling;
carrying the duration of the monitoring window for the DCI signaling in a media access control (MAC) layer signaling; and
carrying the duration of the monitoring window for the DCI signaling in higher layer signaling.

The duration of the monitoring window for the DCI signaling may be indicated implicitly by configuring a monitoring timer for the terminal, and the terminal may determine the duration of the monitoring window for the DCI signaling based on the monitoring timer.
(2) The network side device configures a monitoring start time and a monitoring end time of a monitoring window for the DCI signaling for the terminal.
The monitoring start time and/or the monitoring end time includes one or more of the following information:

i. a time point associated with SPS; and
ii. an independent time point.

In an embodiment, the monitoring position information further includes one or more of the following information.

1. A time point associated with SPS.

The time point associated with SPS may be a relative time point.
In an embodiment, the time point associated with SPS is one or more of the following time points.

(1) A time point associated with an SPS PDSCH

In an embodiment, the time point associated with SPS may be a time point associated with a start slot/an end slot/a start symbol/an end symbol of the SPS PDSCH.

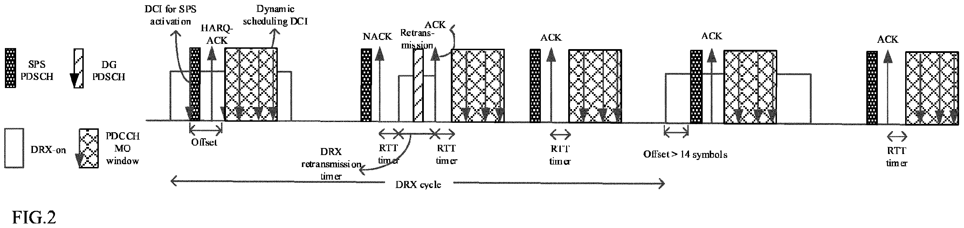

FIG. 2 is a first schematic diagram of an SPS PDSCH enhancement scheme according to an embodiment of the present application. As shown in FIG. 2, for example, at a time offset after the start slot of the SPS PDSCH, the DCI signaling starts to be monitored.

(2) A time point associated with a hybrid automatic repeat request (HARQ)-acknowledge (ACK) for the SPS PDSCH

In an embodiment, the time point associated with the HARQ-ACK for the SPS PDSCH may be a time point associated with a start slot/an end slot/a start symbol/an end symbol of the SPS PDSCH.
As shown in FIG. 2, for example, the DCI signaling starts to be monitored at a time offset after the end slot of the HARQ-ACK for the SPS PDSCH.

(3) A time point associated with expiring of an SPS PDSCH round trip time (RTT) timer

In an embodiment, the time point associated with expiring of the SPS PDSCH RTT timer may be a time point associated with a start slot/an end slot/a start symbol/an end symbol of the expiring of the SPS PDSCH RTT timer.
As shown in FIG. 2, for example, the DCI signaling starts to be monitored at a time offset after a start symbol of the expiring of the SPS PDSCH RTT timer.
In an embodiment, a time unit of an offset value of the monitoring position information relative to the time point may be a slot, a span, a symbol or millisecond.
In an embodiment, the time offset between the monitoring position information and the time point may be configured, and the time unit may be millisecond, a slot, or a symbol.
For example, the specific unit of the start time may be the start symbol of a slot, or a symbol position of a slot. The duration of the monitoring window may be several consecutive slots, or several consecutive symbols in a slot, or several fixed symbols in several consecutive slots. A length unit of the timer may be millisecond, slot, or symbol.
It should be noted that a value of the time offset between the start time and a time point associated with the start slot/end slot/start symbol/end symbol of SPS PDSCH or HARQ-ACK for the SPS PDSCH or expiring of the SPS PDSCH RTT timer may be greater than or equal to 0, that is, the above time point is the start time, or the start time is located at an offset time position subsequent to the above time point. The value of the time offset may be less than 0, that is, the start time is located at an offset time position ahead of the above time point.
Alternatively, the value of the time offset between the start time and a time point associated with the start slot/end slot/start symbol/end symbol of SPS PDSCH or HARQ-ACK for the SPS PDSCH or expiring of the SPS PDSCH RTT timer may be greater than or equal to 0, but the start time point may be the above time point, or the start time point may be located at an offset time position subsequent to the above time point, or the start time point may be located at an offset time position ahead of the above time point.

2. An independent time point

The independent time point may be a specific time point, or a specific time point determined by the terminal through calculation. This independent time point may be independent of the SPS.

For example, the start time may be an absolute time, that is, a specific time calculated by the terminal based on a system frame number (SFN) through configuring a periodicity and an offset.

For example, a slot number of the start time satisfies the following conditions:

$$(n_f \cdot N_{slot}^{frame,\mu} + n_{s,f}^{\mu} - o_s) \bmod k_s = 0,$$

where $n_f$ is the frame number, $n_{s,f}^{\mu}$ is a slot number per subcarrier $\mu$, $N_{slot}^{frame,\mu}$ is the number of slots included in a subframe per subcarrier $\mu$, $k_s$ is the monitoring period, and $o_s$ is the offset value.

Option 2: monitoring position information dynamically adjusted based on first information.

The base station configures first information for the terminal to dynamically indicate changes in monitoring position information, for example, dynamically indicating one or more of a size of the monitoring window, the monitoring start position, and the monitoring end position.

For example, it indicates how long the terminal continues to monitor after dynamically scheduled DCI is monitored.

The first information may be carried in the L1 signaling, the MAC signaling or the higher layer signaling.

For example, the first information may be a monitoring timer or duration, or indication signaling information, or a reference signal. The monitoring timer is taken as an example, when the monitoring timer does not expire, the terminal may continue to perform service-specific DCI monitoring. When service data packet is transmitted at the end of the monitoring window due to delay jitter, the data packet needs to wait for a subsequent monitoring window or monitoring occasion to be transmitted. The configuration of the monitoring timer may help reduce the transmission delay caused by the delay jitter.

In an embodiment, the monitoring occasion (MO) for the DCI signaling may be one of the following.

(1) It may be configured through the configuration of a traditional search space set.

For example, the parameters, such as a monitoring periodicity and offset, a frequency domain aggregation level (AL), etc., are configured.

(2) It may be configured through associated configurations on a single MO (this may be at the slot level or span level).

(3) It may be associated with an index value of a search space.

In an embodiment, a time unit of the MO for DCI signaling may be a slot or a span, or the monitoring occasion may be configured by associating the index value of the search space.

Step 102: indicating dynamic data transmission by using the dynamic resource indication information during a discontinuous reception (DRX)-off period.

In an embodiment, after the network side device configures the dynamic resource indication information associated with the SPS for the terminal, the network side device indicates dynamic data transmission by using the dynamic resource indication information during the DRX-off period.

After the terminal determines the dynamic resource indication information associated with the SPS transmitted from the network side device, the terminal receives dynamic data based on the dynamic resource indication information during the DRX-off period.

In an embodiment, the method further includes the following steps.

The network side device transmits a dynamic transmission indicator to the terminal, where the dynamic transmission indicator is used for indicating the terminal that the network side device performs dynamic data transmission.

The base station indicates the terminal to perform subsequent dynamic transmission indicators, indicating that the terminal may monitor the dynamically scheduled DCI after SPS PDSCH reception; otherwise, the terminal performs regular SPS PDSCH reception.

In an embodiment, the dynamic transmission indicator is indicated through L1 signaling, media access control (MAC) control element (CE) signaling, a power saving signal or higher layer signaling.

For example, in case that the terminal receives the following indications, and the base station configures monitoring position information for the dynamically scheduled DCI, it means that the terminal may monitor the dynamically scheduled DCI after the SPS PDSCH reception. Otherwise, the terminal performs regular SPS PDSCH reception. Specific indications include one or more of the following.

1. The terminal capability supports monitoring the dynamically scheduling DCI after the SPS PDSCH reception.
2. The terminal is indicated by scheduling DCI (such as: SPS PDSCH activation DCI, SPS PDSCH retransmission DCI, etc.).

3. The terminal is indicated by MAC CE to monitor the dynamically schedule DCI after subsequent SPS PDSCH reception.

4. The higher layer signaling is configured with a switch, indicating that monitoring dynamically scheduled DCI after the SPS PDSCH reception may be supported.

5. The terminal is indicated by the power saving signal to monitor the dynamically schedule DCI after subsequent SPS PDSCH reception.

It should be noted that the combination of several indications refers to the simultaneous presence of several of the above indications, for example: terminal capability and scheduling DCI indications, or terminal capability and switches configured by the higher layer signaling, etc., which are not described again here.

In an embodiment, in case that SPS PDSCH does not complete data transmission in a buffer of the network side device side, the network side device may indicate the terminal to monitor dynamically scheduled DCI after SPS PDSCH.

After the terminal receives the dynamic transmission indicator transmitted from the network side device, the terminal continues to monitor the dynamically scheduled DCI starting from the monitoring start position configured by the network side device and the granularity of monitoring is MO. That is, the terminal receives dynamic data based on the dynamic resource indication information during the DRX-off period.

In the dynamic data transmission method provided by the embodiments of the present application, SPS PDSCH transmission is assisted through dynamic scheduling within DRX off period to complete the transmission of data services with large differences in data size. In case that the data packet is large, and the reserved SPS PDSCH resources are insufficient, data packet transmission is assisted without waiting for the next SPS PDSCH or DRX on period. In case that the data packet is small, the periodicity of reserved SPS PDSCH resources and dynamic scheduling resources may be used to complete data transmission and the transmission delay is reduced.

In an embodiment, the method further includes the following step:

transmitting a stop indicator to the terminal, where the stop indicator is used for indicating the terminal that the network side device stops dynamic data transmission.

In an embodiment, in case that a specific condition is met or the base station transmits an indication, the terminal stops monitoring the DCI in the monitoring window for the dynamically scheduled DCI.

For example, in case that the terminal completes data packet transmission, in order to avoid unnecessary DCI monitoring, the base station indicates the terminal to stop monitoring DCI in the monitoring window for the dynamically scheduled DCI.

In an embodiment, the stop indicator is carried through L1 signaling, media access control (MAC) control element (CE) signaling, a power saving signal or higher layer signaling.

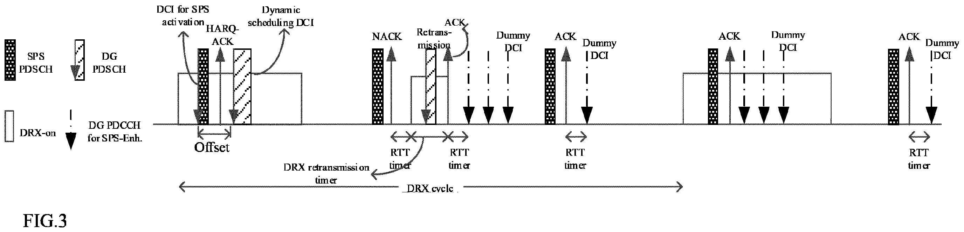

FIG. 3 is a second schematic diagram of a semi-persistent scheduling (SPS) physical downlink shared channel (PDSCH) enhancement scheme according to an embodiment of the present application. As shown in FIG. 3, for example, in case that a specific condition is met or the base station transmits an indication, the terminal is indicated to stop monitoring the DCI in the monitoring window for the dynamically scheduled DCI. It may be any one or a combination of the following conditions.

1. The terminal receives the scheduled DCI whose scheduling information is dummy.

2. The terminal stops monitoring the DCI in case that a configured timer expires. The configured timer is independent of the monitoring window.

3. The terminal receives SPS PDSCH release DCI.

It should be noted that the combination here refers to the simultaneous presence of the above-mentioned indications. If any one of them is met, monitoring the dynamically scheduled DCI may be stopped.

For example, in case that a monitoring timer and the scheduled DCI whose scheduling information is dummy are configured at the same time, either one of above conditions is met, monitoring the dynamically scheduled DCI may be stopped, which is not described again here.

In the embodiment of the present application, stopping monitoring the DCI may mean that the terminal skips monitoring, or the terminal enters sleep.

By the dynamic data transmission method provided by the embodiments of the present application, monitoring the dynamically scheduled DCI is stopped when specific conditions are met, which may reduce signaling overhead and improve frequency spectrum utilization.

In an embodiment, whether to monitor the dynamically scheduled DCI may be indicated by a monitoring window and/or a monitoring start position for the dynamically scheduled DCI carried in a power saving signal, such as DCI format 2_6 or non-scheduled DCI or MAC CE.

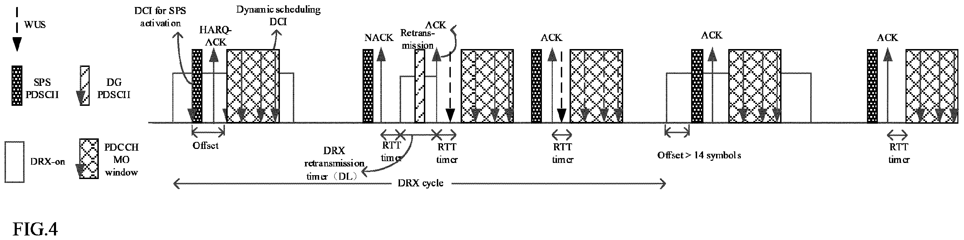

FIG. 4 is a third schematic diagram of a semi-persistent scheduling (SPS) physical downlink shared channel (PDSCH) enhancement scheme according to an embodiment of the present application. As shown in FIG. 4, for the case where DCI format 2_6 carries the monitoring window and/or monitoring start position for the dynamically scheduled DCI, it means that one or more monitoring occasions may be configured during the DRX-off period to indicate whether to monitor the dynamically scheduled DCI after one or more subsequent SPS PDSCHs. The monitoring position for the DCI format 2_6 may be transmitted after the SPS PDSCH.

Alternatively, taking the start time ahead of the reference time point as an example, in case that the terminal monitors the dynamically scheduled DCI before SPS PDSCH, the terminal may perform one of the following operations.

1. If the PDSCH indicated by the dynamically scheduled DCI is located behind the SPS PDSCH, the terminal may receive dynamically scheduled data information based on the PDSCH indicated by the dynamically scheduled DCI after the SPS PDSCH or the HARQ-ACK for the SPS PDSCH or the expiring of the SPS PDSCH RTT timer.

2. If the PDSCH indicated by the dynamically scheduled DCI is located ahead of the SPS PDSCH, or overlaps with the SPS PDSCH slot, the terminal may receive dynamically scheduled data information based on the PDSCH indicated by the dynamically scheduled DCI without performing the SPS PDSCH reception or the terminal may receive non-overlapping PDSCH based on the SPS PDSCH.

The above reference time point may be a time point associated with a start slot/an end slot/a start symbol/an end symbol of the SPS PDSCH, a time point associated with a start slot/an end slot/a start symbol/an end symbol of the SPS PDSCH, a time point associated with a start slot/an end slot/a start symbol/an end symbol of the expiring of the SPS PDSCH RTT timer, etc.

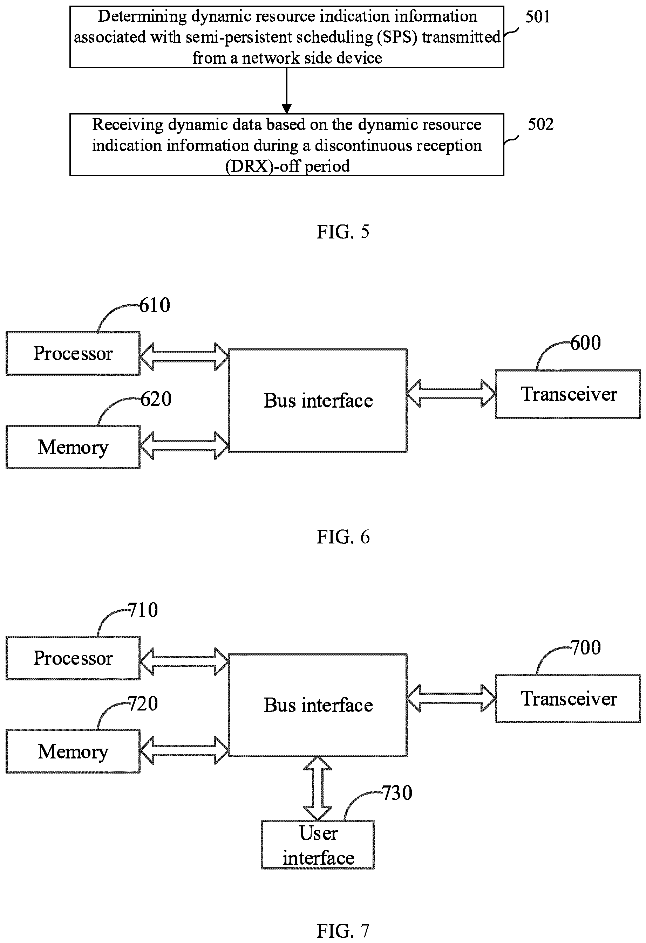

FIG. 5 is a second schematic flowchart of a dynamic data transmission method according to an embodiment of the present application. As shown in FIG. 5, the dynamic data transmission method according to an embodiment of the present application may be applied to a terminal, such as a mobile phone, etc. The dynamic data transmission method includes the following steps.

Step 501: determining dynamic resource indication information associated with semi-persistent scheduling (SPS) transmitted from a network side device.

Step 502: receiving dynamic data based on the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the method further includes the following step:
determining monitoring position information for the DCI signaling.

In an embodiment, the determining the monitoring position information for the DCI signaling includes:

determining a monitoring start time for the DCI signaling; or,
determining a monitoring start time and a duration of a monitoring window for the DCI signaling; or,

determining a monitoring start time and a monitoring end time of a monitoring window for the DCI signaling.

In an embodiment, the method further includes the following step:
receiving a stop indicator transmitted from the network side device, where the stop indicator is used for indicating the terminal that the network side device stops dynamic data transmission.

The dynamic data transmission method provided by the embodiments of the present application may be completed by referring the above-mentioned dynamic data transmission method embodiment applied to the network-side device, and may achieve the same effect. The corresponding method in this embodiment and the above-mentioned ones is not repeated here. The same parts and beneficial effects of the method embodiments are not described in detail.

FIG. 6 is a schematic structural diagram of a network side device according to an embodiment of the present application. As shown in FIG. 6, the network side device includes a memory 620 storing a computer program, a processor 610 and a transceiver 600 transmitting and receiving data under control of the processor 610, where the computer program, when executed by the processor 610 of the network side device, causes the network side device to perform the following operations of:

configuring dynamic resource indication information associated with semi-persistent scheduling (SPS) for a terminal; and
indicating dynamic data transmission by using the dynamic resource indication information during a discontinuous reception (DRX)-off period.

In an embodiment, the transceiver 600 is used for transmitting and receiving data under control of the processor 610.

In FIG. 6, a bus architecture may include any number of interconnected buses and bridges, which are linked together through various circuits of one or more processors represented by processor 610 and one or more memories represented by the memory 620. The bus architecture may also link together various other circuits, such as peripherals, voltage regulators, and power management circuits. The bus interface provides an interface. Transceiver 600 may be multiple elements, i.e., including a transmitter and a receiver, units for providing communication with various other devices over transmission media including wireless channels, wired channels, fiber optic cables, and the like. The processor 610 is responsible for managing the bus architecture and general processing, and the memory 620 may store data used by the processor 610 when performing operations.

The processor 610 may be a central processing unit (CPU), an application specific integrated circuit (ASIC), a field-programmable gate array (FPGA), or a complex programmable logic device (CPLD), the processor may also use a multi-core architecture.

In an embodiment, the dynamic resource indication information is downlink control information (DCI) signaling associated with SPS, and resource allocation information is carried through the DCI signaling.

In an embodiment, the computer program, when executed by the processor of the network side device, causes the network side device to further perform the following operation of:

configuring monitoring position information for the DCI signaling for the terminal.

In an embodiment, the monitoring position information includes one or more of the following information:

monitoring position information semi-statically configured through higher layer signaling; and
monitoring position information dynamically adjusted based on first information.

In an embodiment, in case that the monitoring position information includes the monitoring position information configured semi-statically through the higher layer signaling, the configuring the monitoring position information for the DCI signaling for the terminal includes:

configuring a monitoring start time for the DCI signaling for the terminal; or,
configuring a monitoring start time and a duration of a monitoring window for the DCI signaling for the terminal; or,
configuring a monitoring start time and a monitoring end time of a monitoring window for the DCI signaling for the terminal.

In an embodiment, the duration is determined by one or more of the following:

carrying in L1 signaling;
carrying in a media access control (MAC) layer signaling;
carrying in higher layer signaling; and
a monitoring timer.

In an embodiment, the monitoring position information further includes one or more of the following information:

a time point associated with SPS; and
an independent time point.

In an embodiment, the time point associated with SPS is one or more of the following time points:

a time point associated with an SPS physical downlink shared channel (PDSCH);

a time point associated with a hybrid automatic repeat request (HARQ)-acknowledge (ACK) for an SPS PDSCH; and
a time point associated with expiring of an SPS PDSCH round trip time (RTT) timer.

In an embodiment, a time unit of an offset value of the monitoring position information relative to the time point is a slot, a span, a symbol or millisecond.

In an embodiment, the computer program, when executed by the processor of the network side device, causes the network side device to further perform the following operation of:

transmitting a dynamic transmission indicator to the terminal, where the dynamic transmission indicator is used for indicating the terminal that the network side device performs dynamic data transmission.

In an embodiment, the computer program, when executed by the processor of the network side device, causes the network side device to further perform the following operation of:

transmitting a stop indicator to the terminal, where the stop indicator is used for indicating the terminal that the network side device stops dynamic data transmission.

In an embodiment, the stop indicator is carried through L1 signaling, media access control (MAC) control element (CE) signaling, a power saving signal or higher layer signaling.

In an embodiment, the above-mentioned network side device according to the embodiments of the present application may implement all the method steps implemented by the above-mentioned method embodiments applied to the network side device, and may achieve the same effect. The same parts and beneficial effects as the same method embodiments are not repeated in the present application.

FIG. 7 is a schematic structural diagram of a terminal according to an embodiment of the present application. As shown in FIG. 7, the terminal includes a memory 720 storing a computer program, a processor 710 and a transceiver 700 transmitting and receiving data under control of the processor 710,

where the computer program, when executed by the processor 710 of the terminal, causes the terminal to perform the following operations of:

determining dynamic resource indication information associated with semi-persistent scheduling (SPS) transmitted from a network side device; and
receiving dynamic data based on the dynamic resource indication information during a discontinuous reception (DRX)-off period.

In an embodiment, the transceiver 700 is used for transmitting and receiving data under control of the processor 710.

In FIG. 7, a bus architecture may include any number of interconnected buses and bridges, which are linked together through various circuits of one or more processors represented by processor 710 and one or more memories represented by the memory 720. The bus architecture may also link together various other circuits, such as peripherals, voltage regulators, and power management circuits. The bus interface provides an interface. The transceiver 700 may be multiple elements, i.e., including a transmitter and a receiver, units for providing communication with various other devices over transmission media including wireless channels, wired channels, fiber optic cables, and the like. For different user equipment, the user interface 730 may also be an interface capable of externally or internally connecting the required equipment, and the connected equipment includes, but not limited to, a keypad, a display, a speaker, a microphone, a joystick, and the like.

The processor 710 is responsible for managing the bus architecture and general processing, and the memory 720 may store data used by the processor 710 when performing operations.

In an embodiment, the processor 710 may be a central processing unit (CPU), an application specific integrated circuit (ASIC), a field-programmable gate array (FPGA), or a complex programmable logic device (CPLD), the processor may also use a multi-core architecture.

The computer program, when executed by the processor, causes the processor to perform any one of the methods of the embodiments of the present application based on the obtained executable instructions by invoking the computer program stored in the memory. The processor and memory may also be physically separated.

In an embodiment, the dynamic resource indication information is downlink control information (DCI) signaling associated with SPS, and resource allocation information is carried through the DCI signaling.

In an embodiment, the computer program, when executed by the processor of the terminal, causes the terminal to further perform the following operation of: determining monitoring position information for the DCI signaling.

In an embodiment, the determining the monitoring position information for the DCI signaling includes:

determining a monitoring start time for the DCI signaling; or,
determining a monitoring start time and a duration of a monitoring window for the DCI signaling; or,
determining a monitoring start time and a monitoring end time of a monitoring window for the DCI signaling.

In an embodiment, the computer program, when executed by the processor of the terminal, causes the terminal to further perform the following operation of: receiving a stop indicator transmitted from the network side device, where the stop indicator is used for indicating the terminal that the network side device stops dynamic data transmission.

It should be noted here that the above-mentioned terminal according to the embodiments of the present application may implement all the method steps implemented by the above-mentioned method embodiments applied to the terminal, and may achieve the same effect. The same parts and beneficial effects as the same method embodiments are not repeated in the present application.

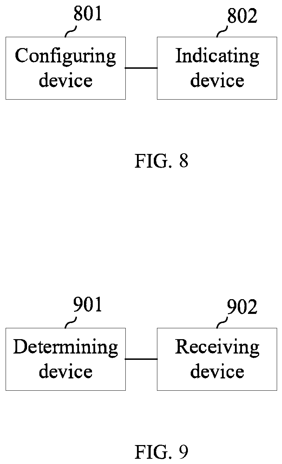

FIG. 8 is a first schematic structural diagram of a dynamic data transmission apparatus according to an embodiment of the present application. As shown in FIG. 8, the dynamic data transmission apparatus according to an embodiment of the present application, including a configuring module 801 and an indicating module 802.

The configuring module 801 is used for configuring dynamic resource indication information associated with semi-persistent scheduling (SPS) for a terminal; and the indicating module 802 is used for indicating dynamic data transmission by using the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the dynamic data transmission apparatus further includes a second configuring module,
where the second configuring module is used for configuring monitoring position information for the DCI signaling for the terminal.

In an embodiment, the monitoring position information includes one or more of the following information:

monitoring position information semi-statically configured through higher layer signaling; and
monitoring position information dynamically adjusted based on first information.

In an embodiment, in case that the monitoring position information includes the monitoring position information configured semi-statically through the higher layer signaling, the second configuring module includes a first configuring sub-module, a second configuring sub-module and a third configuring sub-module,

where the first configuring sub-module is used for configuring a monitoring start time for the DCI signaling for the terminal;
the second configuring sub-module is used for configuring a monitoring start time and a duration of a monitoring window for the DCI signaling for the terminal; and
the third configuring sub-module is used for configuring a monitoring start time and a monitoring end time of a monitoring window for the DCI signaling for the terminal.

In an embodiment, the duration is determined by one or more of the following:

carrying in L1 signaling;
carrying in a media access control (MAC) layer signaling;
carrying in higher layer signaling; and
a monitoring timer.

In an embodiment, the monitoring position information further includes one or more of the following information:

a time point associated with SPS; and
an independent time point.

In an embodiment, the time point associated with SPS is one or more of the following time points:

a time point associated with an SPS physical downlink shared channel (PDSCH);
a time point associated with a hybrid automatic repeat request (HARQ)-acknowledge (ACK) for an SPS PDSCH; and
a time point associated with expiring of an SPS PDSCH round trip time (RTT) timer.

In an embodiment, a time unit of an offset value of the monitoring position information relative to the time point is a slot, a span, a symbol or millisecond.

In an embodiment, the dynamic data transmission apparatus further includes a first indicating module, where the first indicating module is used for transmitting a dynamic transmission indicator to the terminal, where the dynamic transmission indicator is used for indicating the terminal that the network side device performs dynamic data transmission.

In an embodiment, the dynamic data transmission apparatus further includes a second indicating module, where the second indicating module is used for transmitting a stop indicator to the terminal, where the stop indicator is used for indicating the terminal that the network side device stops dynamic data transmission.

In an embodiment, the stop indicator is carried through L1 signaling, media access control (MAC) control element (CE) signaling, a power saving signal or higher layer signaling.

In an embodiment, the above-mentioned dynamic data transmission apparatus according to the embodiments of the present application may implement all the method steps implemented by the above-mentioned method embodiments applied to the network side device, and may achieve the same effect. The same parts and beneficial effects as the same method embodiments are not repeated in the present application.

FIG. 9 is a second schematic structural diagram of a dynamic data transmission apparatus according to an embodiment of the present application. As shown in FIG. 9, the dynamic data transmission apparatus according to an embodiment of the present application, including a determining module 901 and a receiving module 902.

The determining module 901 is used for determining dynamic resource indication information associated with semi-persistent scheduling (SPS) transmitted from a network side device; and the receiving module 902 is used for receiving dynamic data based on the dynamic resource indication information during a discontinuous reception (DRX)-off period.

In an embodiment, the dynamic resource indication information is downlink control information (DCI) signaling associated with SPS, and resource allocation information is carried through the DCI signaling.

In an embodiment, the dynamic data transmission apparatus further includes a second determining module,

where the second determining module is used for determining monitoring position information for the DCI signaling.

In an embodiment, the second determining module includes a first determining sub-module, a second determining sub-module and a third determining sub-module,

where the first determining sub-module is used for determining a monitoring start time for the DCI signaling;
the second determining sub-module is used for determining a monitoring start time and a duration of a monitoring window for the DCI signaling; and
the third determining sub-module is used for determining a monitoring start time and a monitoring end time of a monitoring window for the DCI signaling.

In an embodiment, the dynamic data transmission apparatus further includes a second receiving module,

where the second receiving module is used for receiving a stop indicator transmitted from the network side device, where the stop indicator is used for indicating the terminal that the network side device stops dynamic data transmission.

In an embodiment, the above-mentioned dynamic data transmission apparatus according to the embodiments of the present application may implement all the method steps implemented by the above-mentioned method embodiments applied to the terminal, and may achieve the same effect. The same parts and beneficial effects as the same method embodiments are not repeated in the present application.

It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a computer readable storage medium. Based on such understanding, the technical solutions of the present application in essence or a part of the technical solutions that contributes to the related art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes such as U disk, mobile hard disk, read-only memory (ROM), random access memory (RAM), magnetic disk, or optical disk.

An embodiment of the present application provides a processor-readable storage medium storing a computer program that, when executed by a processor, causes the processor to perform the steps of the methods described above, including:

> configuring dynamic resource indication information associated with semi-persistent scheduling (SPS) for a terminal; and indicating dynamic data transmission by using the dynamic resource indication information during a discontinuous reception (DRX)-off period;
> or,
> determining dynamic resource indication information associated with semi-persistent scheduling (SPS) transmitted from a network side device; and receiving dynamic data based on the dynamic resource indication information during a discontinuous reception (DRX)-off period.

It should be noted that the processor-readable storage medium may be any available medium or data storage device that may be accessed by the processor, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In should be noted that terms "first", "second", etc., are used to distinguish similar objects and are not used to describe a particular order or sequence. It should be noted that these terms are interchangeable under appropriate circumstances so that embodiments of the present application may be practiced in sequences other than those illustrated or described herein, and the objects distinguished by "first" and "second" have the same type, and the number of the objects is not limited. For example, the first object may be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In the embodiments of the present application, the term "multiple" refers to two or more than two, and other quantifiers are similar.

The solutions according to the embodiments of the present application may be applicable to various systems, especially 5G systems. For example, applicable systems may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a user equipment and a network side device. The system may also include a core network part, such as an evolved packet system (EPS), a 5G system (5GS), and the like.

The terminal in the embodiments of the present application may be a device that provides voice and/or data connectivity to a user, a handheld device with a radio connection function, or other processing device connected to a radio modem. In different systems, the names of the terminal may be different. For example, in the 5G system, the terminal may be called as user equipment (UE). A radio terminal may communicate with one or more core networks (CN) via a radio access network (RAN), and the radio terminal may be a mobile terminal, such as a mobile phone (or "cellular "phone) and computers with mobile terminal, e.g., a portable mobile device, a pocket-sized mobile device, a hand-held mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A radio terminal may also be called a system, a subscriber unit, a subscriber station, a mobile station, a mobile, a remote station, an access point, a remote terminal, an access terminal, a user terminal, a user agent, and a user device, which are not limited in the embodiments of the present application.

The network side device in the embodiments of the present application may be a base station, and the base station may include multiple cells providing services for the terminal. Depending on the specific application, the network side device may also be called an access point, or may be a device in the access network that communicates with radio terminal through one or more sectors on the air interface, or other names. Network device may be used to exchange received air frames with internet protocol (IP) packets, and act as a router between radio terminal and the rest of the access network, and the rest of the access network may include an IP communication network. The network side device may also coordinate attribute management for the air interface. For example, the network device in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As will be appreciated by those skilled in the art, embodiments of the present application may be provided as a method, system, or computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made to the present application without departing from the scope of the present application. Thus, provided that these modifications and variations of the present application fall within the scope of the claims of the present application and their equivalents, the present application is also intended to cover such modifications and variations.

**Claims**

1. A dynamic data transmission method, applied to a terminal, comprising:

    determining dynamic resource indication information associated with semi-persistent scheduling, SPS, transmitted from a network side device; and
    receiving dynamic data based on the dynamic resource indication information during a discontinuous reception-off, DRX-off, period.

2. The method of claim 1, wherein the dynamic resource indication information is downlink control information, DCI, signaling associated with SPS, and resource allocation information is carried through the DCI signaling.

**3.** The method of claim 2, further comprising: determining monitoring position information for the DCI signaling.

**4.** The method of claim 3, wherein determining the monitoring position information for the DCI signaling comprises:

determining a monitoring start time for the DCI signaling; or,
determining a monitoring start time and a duration of a monitoring window for the DCI signaling; or,
determining a monitoring start time and a monitoring end time of a monitoring window for the DCI signaling.

**5.** The method of claim 1, further comprising: receiving a stop indicator transmitted from the network side device, wherein the stop indicator is used for indicating the terminal that the network side device stops dynamic data transmission.

**6.** A dynamic data transmission method, applied to a network side device, comprising:

configuring dynamic resource indication information associated with semi-persistent scheduling, SPS, for a terminal; and
indicating dynamic data transmission by using the dynamic resource indication information during a discontinuous reception-off, DRX-off, period.

**7.** The method of claim 6, wherein the dynamic resource indication information is downlink control information, DCI, signaling associated with SPS, and resource allocation information is carried through the DCI signaling.

**8.** The method of claim 7, further comprising: configuring monitoring position information for the DCI signaling for the terminal.

**9.** The method of claim 8, wherein the monitoring position information comprises one or more of the following information:

monitoring position information semi-statically configured through higher layer signaling; and
monitoring position information dynamically adjusted based on first information.

**10.** The method of claim 9, wherein in case that the monitoring position information comprises the monitoring position information configured semi-statically through the higher layer signaling, the configuring the monitoring position information for the DCI signaling for the terminal comprises:

configuring a monitoring start time for the DCI signaling for the terminal; or,
configuring a monitoring start time and a duration of a monitoring window for the DCI signaling for the terminal; or,
configuring a monitoring start time and a monitoring end time of a monitoring window for the DCI signaling for the terminal.

**11.** The method of claim 10, wherein the duration is determined by one or more of the following:

carrying in L1 signaling;
carrying in a media access control, MAC, layer signaling;
carrying in higher layer signaling; and
a monitoring timer.

**12.** The method of any one of claims 9 to 11, wherein the monitoring position information further comprises one or more of the following information:

a time point associated with SPS; and
an independent time point.

**13.** The method of claim 12, wherein the time point associated with SPS is one or more of the following:

a time point associated with an SPS physical downlink shared channel, PDSCH;
a time point associated with a hybrid automatic repeat request-acknowledge, HARQ-ACK, for an SPS PDSCH; and
a time point associated with expiring of an SPS PDSCH round trip time, RTT, timer.

**14.** The method of claim 13, wherein a time unit of an offset value of the monitoring position information relative to the time point is a slot, a span, a symbol or millisecond.

**15.** The method of claim 6, further comprising: transmitting a dynamic transmission indicator to the terminal, wherein the dynamic transmission indicator is used for indicating the terminal that the network side device performs dynamic data transmission.

**16.** The method of claim 6, further comprising: transmitting a stop indicator to the terminal, wherein the stop indicator is used for indicating the terminal that the network side device stops dynamic data transmission.

**17.** The method of claim 16, wherein the stop indicator is carried through L1 signaling, media access control, MAC, control element, CE, signaling, a power saving signal or higher layer signaling.

18. A network side device, comprising a memory storing a computer program, a processor, a transceiver for transmitting and receiving data under control of the processor,

where the computer program, when executed by the processor of the network side device, causes the network side device to perform the following operations of:

configuring dynamic resource indication information associated with semi-persistent scheduling, SPS, for a terminal; and
indicating dynamic data transmission by using the dynamic resource indication information during a discontinuous reception-off, DRX-off, period.

19. The network side device of claim 18, wherein the dynamic resource indication information is downlink control information, DCI, signaling associated with SPS, and resource allocation information is carried through the DCI signaling.

20. The network side device of claim 19, wherein the computer program, when executed by the processor of the network side device, causes the network side device to further perform the following operation:
configuring monitoring position information for the DCI signaling for the terminal.

21. The network side device of claim 20, wherein the monitoring position information comprises one or more of the following information:

monitoring position information semi-statically configured through higher layer signaling; and
monitoring position information dynamically adjusted based on first information.

22. The network side device of claim 21, wherein in case that the monitoring position information comprises the monitoring position information configured semi-statically through the higher layer signaling, configuring the monitoring position information for the DCI signaling for the terminal comprises:

configuring a monitoring start time for the DCI signaling for the terminal; or,
configuring a monitoring start time and a duration of a monitoring window for the DCI signaling for the terminal; or,
configuring a monitoring start time and a monitoring end time of a monitoring window for the DCI signaling for the terminal.

23. The network side device of claim 22, wherein the duration is determined by one or more of the following:

carrying in L1 signaling;
carrying in a media access control, MAC, layer signaling;
carrying in higher layer signaling; and
a monitoring timer.

24. The network side device of any one of claims 21 to 23, wherein the monitoring position information further comprises one or more of the following information:

a time point associated with SPS; and
an independent time point.

25. The network side device of claim 24, wherein the time point associated with SPS is one or more of the following:

a time point associated with an SPS physical downlink shared channel, PDSCH;
a time point associated with a hybrid automatic repeat request-acknowledge, HARQ-ACK, for an SPS PDSCH; and
a time point associated with expiring of an SPS PDSCH round trip time, RTT, timer.

26. The network side device of claim 25, wherein a time unit of an offset value of the monitoring position information relative to the time point is a slot, a span, a symbol or millisecond.

27. The network side device of claim 18, wherein the computer program, when executed by the processor of the network side device, causes the network side device to further perform the following operation of:
transmitting a dynamic transmission indicator to the terminal, wherein the dynamic transmission indicator is used for indicating the terminal that the network side device performs dynamic data transmission.

28. The network side device of claim 18, wherein the computer program, when executed by the processor of the network side device, causes the network side device to further perform the following operation of:
transmitting a stop indicator to the terminal, wherein the stop indicator is used for indicating the terminal that the network side device stops dynamic data transmission.

29. The network side device of claim 28, wherein the stop indicator is carried through L1 signaling, media access control, MAC, control element, CE, signaling, a power saving signal or higher layer signaling.

30. A terminal, comprising a memory storing a computer program, a processor, and a transceiver receiving and transmitting data under control of the processor, where the computer program, when executed by the processor of the terminal, causes the terminal to perform the following operations of:

> determining dynamic resource indication information associated with semi-persistent scheduling, SPS, transmitted from a network side device; and
> receiving dynamic data based on the dynamic resource indication information during a discontinuous reception-off, DRX-off, period.

31. The terminal of claim 30, wherein the dynamic resource indication information is downlink control information, DCI, signaling associated with SPS, and resource allocation information is carried through the DCI signaling.

32. The terminal of claim 31, wherein the computer program, when executed by the processor of the terminal, causes the terminal to further perform the following operation of:
determining monitoring position information for the DCI signaling.

33. The terminal of claim 32, wherein the determining the monitoring position information for the DCI signaling comprises:

> determining a monitoring start time for the DCI signaling; or,
> determining a monitoring start time and a duration of a monitoring window for the DCI signaling; or,
> determining a monitoring start time and a monitoring end time of a monitoring window for the DCI signaling.

34. The terminal of claim 30, wherein the computer program, when executed by the processor of the terminal, causes the terminal to further perform the following operation of:
receiving a stop indicator transmitted from the network side device, wherein the stop indicator is used for indicating the terminal that the network side device stops dynamic data transmission.

35. A dynamic data transmission apparatus, comprising:

> a determining module, used for determining dynamic resource indication information associated with semi-persistent scheduling, SPS, transmitted from a network side device; and
> a receiving module, used for receiving dynamic data based on the dynamic resource indication information during a discontinuous reception-off, DRX-off, period.

36. The apparatus of claim 35, wherein the dynamic resource indication information is downlink control information, DCI, signaling associated with SPS, and resource allocation information is carried through the DCI signaling.

37. The apparatus of claim 36, further comprising a second determining module,
wherein the second determining module is used for determining monitoring position information for the DCI signaling.

38. The apparatus of claim 37, wherein the second determining module comprises a first determining sub-module, a second determining sub-module and a third determining sub-module,

> wherein the first determining sub-module is used for determining a monitoring start time for the DCI signaling;
> the second determining sub-module is used for determining a monitoring start time and a duration of a monitoring window for the DCI signaling; and
> the third determining sub-module is used for determining a monitoring start time and a monitoring end time of a monitoring window for the DCI signaling.

39. The apparatus of claim 35, further comprising a second receiving module,
wherein the second receiving module is used for receiving a stop indicator transmitted from the network side device, wherein the stop indicator is used for indicating the terminal that the network side device stops dynamic data transmission.

40. A dynamic data transmission apparatus, comprising:

> a configuring module, used for configuring dynamic resource indication information associated with semi-persistent scheduling, SPS, for a terminal; and
> an indicating module, used for indicating dynamic data transmission by using the dynamic resource indication information during a discontinuous reception-off, DRX-off, period.

41. The apparatus of claim 40, wherein the dynamic resource indication information is downlink control information, DCI, signaling associated with SPS, and resource allocation information is carried through the DCI signaling.

42. The apparatus of claim 41, further comprising a second configuring module,

wherein the second configuring module is used for configuring monitoring position information for the DCI signaling for the terminal.

43. The apparatus of claim 42, wherein the monitoring position information comprises one or more of the following information:

> monitoring position information semi-statically configured through higher layer signaling; and monitoring position information dynamically adjusted based on first information.

44. The apparatus of claim 43, wherein in case that the monitoring position information comprises the monitoring position information configured semi-statically through the higher layer signaling, the second configuring module comprises a first configuring sub-module, a second configuring sub-module and a third configuring sub-module,

> wherein the first configuring sub-module is used for configuring a monitoring start time for the DCI signaling for the terminal;
> the second configuring sub-module is used for configuring a monitoring start time and a duration of a monitoring window for the DCI signaling for the terminal; and
> the third configuring sub-module is used for configuring a monitoring start time and a monitoring end time of a monitoring window for the DCI signaling for the terminal.

45. The apparatus of claim 44, wherein the duration is determined by one or more of the following:

> carrying in L1 signaling;
> carrying in a media access control, MAC, layer signaling;
> carrying in higher layer signaling; and
> a monitoring timer.

46. The apparatus of any one of claims 43 to 45, wherein the monitoring position information further comprises one or more of the following information:

> a time point associated with SPS; and
> an independent time point.

47. The apparatus of claim 46, wherein the time point associated with SPS is one or more of the following:

> a time point associated with an SPS physical downlink shared channel, PDSCH;
> a time point associated with a hybrid automatic repeat request-acknowledge, HARQ-ACK, for an SPS PDSCH; and
> a time point associated with expiring of an SPS PDSCH round trip time, RTT, timer.

48. The apparatus of claim 47, wherein a time unit of an offset value of the monitoring position information relative to the time point is a slot, a span, a symbol or millisecond.

49. The apparatus of claim 40, further comprising a first indicating module,
wherein the first indicating module is used for transmitting a dynamic transmission indicator to the terminal, wherein the dynamic transmission indicator is used for indicating the terminal that the network side device performs dynamic data transmission.

50. The apparatus of claim 40, further comprising a second indicating module,
wherein the second indicating module is used for transmitting a stop indicator to the terminal, wherein the stop indicator is used for indicating the terminal that the network side device stops dynamic data transmission.

51. The apparatus of claim 50, wherein the stop indicator is carried through L1 signaling, media access control, MAC, control element, CE, signaling, a power saving signal or higher layer signaling.

52. A processor-readable storage medium storing a computer program that, when executed by a processor, causes the processor to perform the dynamic data transmission method of any one of claims 1 to 17.

Configuring dynamic resource indication information associated with semi-persistent scheduling (SPS) for a terminal 101

Indicating dynamic data transmission using the dynamic resource indication information during a discontinuous reception (DRX)-off period 102

FIG. 1

SPS PDSCH

DG PDSCH

DRX-on

PDCCH MO window

DCI for SPS activation

HARQ-ACK

Dynamic scheduling DCI

ACK Retrans-mission

NACK

ACK

ACK

ACK

ACK

Offset

DRX retransmission timer

RTT timer

RTT timer

RTT timer

Offset > 14 symbols

RTT timer

DRX cycle

FIG.2

FIG.3

FIG.4

| Determining dynamic resource indication information associated with semi-persistent scheduling (SPS) transmitted from a network side device | 501 |
|---|---|

| Receiving dynamic data based on the dynamic resource indication information during a discontinuous reception (DRX)-off period | 502 |

FIG. 5

```
610
Processor

620
Memory

Bus interface

600
Transceiver
```

FIG. 6

```
710
Processor

720
Memory

Bus interface

700
Transceiver

730
User
interface
```

FIG. 7

801
802

| Configuring device | | Indicating device |

FIG. 8

901
902

| Determining device | | Receiving device |

FIG. 9

## INTERNATIONAL SEARCH REPORT

| | International application No. |
| --- | --- |
| | **PCT/CN2022/110145** |

| **A.** | **CLASSIFICATION OF SUBJECT MATTER** |
| --- | --- |

H04W 72/04(2009.01)i

According to International Patent Classification (IPC) or to both national classification and IPC

| **B.** | **FIELDS SEARCHED** |
| --- | --- |

Minimum documentation searched (classification system followed by classification symbols)

H04W; H04Q; H04M; H04L

Documentation searched other than minimum documentation to the extent that such documents are included in the fields searched

Electronic data base consulted during the international search (name of data base and, where practicable, search terms used)

CNABS, CNKI, CNTXT, VEN, ENTXT, DWPI, 3GPP: 动态, 数据, 传输, 网络侧, 设备, SPS, 接收, 下行控制信息, 信令, 监听, 起始时间, 持续时间, 终止时间, dynamic, data, transmit, network side, UE, SPS, reception, DCI, signaling, monitoring, starting time, duration, finish time

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 108632743 A (SHANGHAI NOKIA BELL CO., LTD.) 09 October 2018 (2018-10-09) description, paragraphs [0005]-[0080] | 1, 2, 6, 7, 18, 19, 30, 31, 35, 36, 40, 41, 52 |
| A | CN 110876185 A (CHINA MOBILE COMMUNICATION LTD., RESEARCH INSTITUTE et al.) 10 March 2020 (2020-03-10) entire document | 1-52 |
| A | CN 110073716 A (OPPO GUANGDONG MOBILE TELECOMMUNICATIONS CO., LTD.) 30 July 2019 (2019-07-30) entire document | 1-52 |
| A | JP 2020039151 A (FUJITSU LTD.) 12 March 2020 (2020-03-12) entire document | 1-52 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 September 2022** | **28 September 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

EP 4 383 890 A1

**INTERNATIONAL SEARCH REPORT**
Information on patent family members

International application No.

**PCT/CN2022/110145**

| Patent document cited in search report | | | Publication date (day/month/year) | Patent family member(s) | | | Publication date (day/month/year) |
|---|---|---|---|---|---|---|---|
| CN | 108632743 | A | 09 October 2018 | WO | 2018172857 | A1 | 27 September 2018 |
| | | | | | None | | |
| CN | 110876185 | A | 10 March 2020 | US | 2021337471 | A1 | 28 October 2021 |
| | | | | AU | 2019331959 | A1 | 06 May 2021 |
| | | | | SG | 11202102027 Q | A | 30 March 2021 |
| | | | | EP | 3846549 | A1 | 07 July 2021 |
| | | | | CA | 3110929 | A1 | 05 March 2020 |
| | | | | JP | 2021536185 | A | 23 December 2021 |
| CN | 110073716 | A | 30 July 2019 | TW | 201826862 | A | 16 July 2018 |
| | | | | WO | 2018126419 | A1 | 12 July 2018 |
| | | | | EP | 3565368 | A1 | 06 November 2019 |
| | | | | US | 2021195681 | A1 | 24 June 2021 |
| | | | | PH | 12019501594 | A1 | 15 June 2020 |
| | | | | IL | 267841 | A | 31 October 2019 |
| | | | | US | 2019350040 | A1 | 14 November 2019 |
| JP | 2020039151 | A | 12 March 2020 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110904389